(19) Europäisches Patentamt / European Patent Office / Office européen des brevets

(11) **EP 4 545 657 A1**

(12) **EUROPEAN PATENT APPLICATION**
published in accordance with Art. 153(4) EPC

(43) Date of publication:
30.04.2025 Bulletin 2025/18

(21) Application number: 23826583.9

(22) Date of filing: 25.06.2023

(51) International Patent Classification (IPC):
$C21D\ 8/02^{(2006.01)}$     $C22C\ 38/14^{(2006.01)}$
$C22C\ 38/26^{(2006.01)}$     $C22C\ 38/04^{(2006.01)}$
$C22C\ 38/12^{(2006.01)}$     $C22C\ 38/28^{(2006.01)}$
$C22C\ 38/18^{(2006.01)}$     $C22C\ 38/02^{(2006.01)}$
$C22C\ 38/38^{(2006.01)}$     $C22C\ 38/06^{(2006.01)}$
$C23C\ 2/06^{(2006.01)}$     $C23C\ 2/40^{(2006.01)}$

(52) Cooperative Patent Classification (CPC):
C21D 1/26; C21D 8/02; C21D 9/52; C22C 38/02;
C22C 38/04; C22C 38/06; C22C 38/12;
C22C 38/14; C22C 38/18; C22C 38/26;
C22C 38/28; C22C 38/38; C23C 2/06; C23C 2/26;
C23C 2/40

(86) International application number:
PCT/CN2023/102174

(87) International publication number:
WO 2023/246939 (28.12.2023 Gazette 2023/52)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 22.06.2022 CN 202210711755

(71) Applicant: BAOSHAN IRON & STEEL CO., LTD.
Shanghai 201900 (CN)

(72) Inventors:
• WANG, Junfeng
  Shanghai 201900 (CN)
• ZHU, Xiaodong
  Shanghai 201900 (CN)
• WU, Zhangwei
  Shanghai 201900 (CN)
• ZHENG, Tao
  Shanghai 201900 (CN)

(74) Representative: Kuhnen & Wacker
Patent- und Rechtsanwaltsbüro PartG mbB
Prinz-Ludwig-Straße 40A
85354 Freising (DE)

(54) **HIGH-STRENGTH AND HIGH FORMABILITY COLD-ROLLED HOT-GALVANIZED STRIP STEEL AND MANUFACTURING METHOD THEREFOR**

(57) Disclosed in the present invention is a high-strength and high formability cold-rolled hot-galvanized strip steel, comprising a substrate and a zinc coating plated on the substrate. The substrate comprises Fe and inevitable impurities, and further comprises the following chemical elements in percentage by mass: C: 0.15-0.25%; Mn: 2.2-3.0%; Si: 0.3-0.9%; Al: 0.1-0.5%; Nb: 0.01-0.1%; Ti: 0.01-0.1%; and Cr: 0.01-0.3%. A base of a microstructure of the substrate comprises retained austenite having a volume fraction of 5-15%, and the microstructure further comprises a carbide precipitated phase having a size less than 80 nm. Accordingly, further disclosed in the present invention is a manufacturing method for the high-strength and high formability cold-rolled hot-galvanized strip steel, comprising the steps of: (1) smelting and casting; (2) hot rolling; (3) pickling; (4) cold rolling; (5) hot galvanizing and recrystallization annealing; and (6) cooling after galvanizing.

EP 4 545 657 A1

Fig.1

**Description**

**Technical field**

The present disclosure relates to a steel material and a manufacturing method thereof, in particular to a hot-dip galvanized steel and a manufacturing method thereof.

**Background Art**

In recent years, with the rapid development of the automobile industry, the steel used in the automotive body-in-white has also undergone rapid iteration. Although the current use of advanced high-strength steel for the automobile has developed from the first generation to the third generation, dual phase steel is still the largest amount of steel.

In comparison with cold-rolled dual phase steel, galvanized dual phase steel has very good corrosion resistance, and it is mostly used in the manufacture of body structural parts and reinforcements. However, with the increasing complexity of the design of body structural parts, the market and operators have put forward higher requirements for the formability of steel plates, and the traditional hot-dip galvanized dual phase steel used has gradually become difficult to meet the design requirements of some body structures.

If TRIP or TWIP steel is used, the elongation is too redundant and the alloy content is high, which will cause waste and reduce manufacturability. Although traditional QP and TBF steels can meet the formability requirements of complex parts and have a low alloy cost, the excessive Si content leads to a decrease in manufacturability and weldability, which limits their application.

It can be seen that in the current prior art, there are not many existing patent solutions for hot-dip galvanized ultra-high-strength steel of 1180MPa grade, which also shows that the manufacture of hot-dip galvanized steel of this strength grade has high technical barriers to a certain extent.

For example, the Chinese patent document with a publication number CN105506513A, a publication date of April 20, 2016, and titled "ultra-high strength cold-rolled automobile steel and its manufacturing method" discloses an ultra-high strength cold-rolled automobile steel and its manufacturing method. Its typical composition is 0.6C-4.5Mn-3Si-5Al. Through the control of the hot rolling process and continuous annealing process, the material acquires excellent strength and plasticity. Its tensile strength is greater than 1180MPa, and at the same time, the elongation is not less than 18%. However, the addition of a large amount of C, Si and Mn significantly increases the difficulty and cost of manufacturing.

For another example, the Chinese patent document with a publication number CN106244923A, a publication date of December 21, 2016, and titled "a cold-rolled high-strength steel plate with excellent phosphating properties and formability and a manufacturing method thereof", discloses a cold-rolled high-strength steel plate with excellent phosphating properties and forming properties and its manufacturing method. Its typical composition is 0.2C-2.5Mn-1.5Si. Through controlled rolling and controlled cooling and continuous annealing treatment, the structure can contain no less than 5% of residual austenite, and it has a tensile strength of $\geq$ 1180MPa, and an elongation of $\geq$14%. In this technical solution, although the chemical element composition of the steel plate is mainly based on C, Si and Mn design, it still has a relatively high Si content, which is not conducive to the subsequent production and spot-welding performance of hot-dip galvanized products.

For another example, the Chinese patent document with a publication number CN102021482A, a publication date of April 20, 2011, and titled "a cold-rolled hot-dip galvanized dual phase steel and its manufacturing method" discloses a 1180MPa grade cold-rolled hot-dip galvanized dual phase steel and its manufacturing method. Its typical composition is 0.12C-2.0Mn-(0.6~1.4)Si-0.5Cr-0.2Mo, and its low alloy content ensures that the material has good manufacturability and weldability. It can acquire 1180MPa grade tensile strength through the conventional DP steel manufacturing process. However, in this technical solution, because the microstructure of the steel plate is ferrite + martensite dual phase structure, its deformation ability is limited, and the elongation of the material is not high. At the same time, a high content of Cr and Mo elements is added to the steel, which not only increases the cost of the alloy, but also is not conducive to the surface quality of galvanized sheet.

Therefore, in order to meet the needs of the market and users, it is urgent to develop a 1180MPa grade high-strength steel with excellent weldability and formability on the basis of ensuring the manufacturability and production cost of cold-rolled hot-dip galvanized dual phase steel.

**Summary**

One of the objects of the present disclosure is to provide a high-strength and high formability cold-rolled hot-dip galvanized steel, and the high-strength and high-formability cold-rolled hot-dip galvanized steel can further introduce residual austenite into the ferrite and martensite structure of the traditional dual phase steel through reasonable composition matching and process design, so that the uniform elongation of the material is greatly improved under the condition of similar strength, and the formability of galvanized steel is broadened.

The high-strength and high-formability cold-rolled hot-dip galvanized steel has a yield strength of 780~1030MPa, a tensile strength of ≥1180MPa, and an elongation $A_{50}$ of ≥11%. It has excellent weldability and formability, and can be effectively used in the manufacture of automotive structural parts, anti-collision parts and other parts, and it has good promotion prospects and application value.

In order to achieve the above purpose, the present disclosure provides a cold-rolled hot-dip galvanized steel, which comprises a substrate and a galvanized layer coated on the substrate, wherein the substrate comprises Fe and inevitable impurity elements, and the substrate further comprises the following chemical elements in percentage by mass:

C: 0.15~0.25%, Mn: 2.2~3.0%, Si: 0.3~0.9%, Al: 0.1 ~0.5%, Nb: 0.01~0.1%, Ti: 0.01~0.1%, Cr: 0.01~0.3%;
wherein the matrix of the microstructure of the substrate comprises a residual austenite with a volume fraction of 5~15%, and the microstructure also comprises a carbide precipitate phase with a size of less than 80nm. In this context, the size of the carbide precipitate phase refers to its particle size.

In some embodiments, the volume fraction of residual austenite in the matrix of the microstructure of the substrate is 5%, 6%, 7%, 8%, 9%, 10%, 11%, 12%, 13%, 14%, 15% or within the range of any two values mentioned above.

In some embodiments, the particle size of the carbide precipitate phase is 10nm, 20nm, 30nm, 40nm, 50nm, 60nm, 70nm, 80nm or within the range of any two values mentioned above, such as 30~70nm.

In some embodiments, the matrix of the microstructure of the substrate comprises ferrite, tempered martensitic lath, bainite, and residual austenite.

Further, in the high-strength and high-formability cold-rolled hot-dip pure zinc galvanized strip steel of the present disclosure, the mass percentage of each chemical element of the substrate is:
C: 0.15~0.25%, Mn: 2.2~3.0%, Si: 0.3~0.9%, Al: 0.1 ~0.5%, Nb: 0.01~0.1%, Ti: 0.01~0.1%, Cr: 0.01~0.3%;
with a balance of Fe and inevitable impurities.

The cold-rolled hot-dip galvanized steel of the present disclosure has high strength and high formability, which has a yield strength of 780~1030MPa, a strength of ≥ 1180MPa, and an elongation $A_{50}$ of ≥11%.

In the current prior art, in order to meet the cooling rate of the galvanizing line, the traditional hot-dip galvanized steel often needs to improve the hardenability of the substrate by adding sufficient alloying elements such as Cr and Mo, which will cause an increase in cost; at the same time, the low-carbon design of this traditional hot-dip galvanized steel is not conducive to the austenite at room temperature, so its structure is mostly ferrite and martensite.

In the present disclosure, the inventor has made a new design of the chemical composition, which can effectively improve the stability of steel austenite by appropriately increasing the carbon content and combining the matching of multiple alloying elements, and reduce the amount of alloying elements such as Cr and Mo at the same time, which can not only effectively reduce costs, but also improve the deterioration of the welding performance of steel caused by the increase of carbon, and ensure certain manufacturability at the same time.

In the high-strength and high formability cold-rolled hot-dip pure zinc galvanized strip steel described in the present disclosure, the design principle of each chemical element is described as follows:

C: In the high-strength and high formability cold-rolled hot-dip pure zinc galvanized strip steel described in the present disclosure, C is an important component element in the hot-dip galvanized steel, which directly affects the strength and plasticity of the galvanized sheet. When the content of C element in the steel is too low, the austenite content formed during annealing in the critical zone will decrease, and the austenite stability and martensite hardenability will decrease, so that it is difficult to ensure the strength and plasticity. At the same time, the content of C element in the steel should not be too high. When the content of C element in the steel is too high, it will lead to the decline of plasticity and weldability of the steel. Therefore, considering the influence of C element content on the properties of steel, in the high-strength and high formability cold-rolled hot-dip pure zinc galvanized strip steel described in the present disclosure, the mass percentage of C element is controlled between 0.15% and 0.25%.

Mn: In the high-strength and high formability cold-rolled hot-dip pure zinc galvanized strip steel described in the present disclosure, the Mn element can improve the austenite stability, make the C curve shift to the right, thereby reducing the critical cooling rate of martensite. The content of Mn in the steel should not be too low. When the Mn content is too low, the hardenability of the steel will be reduced, and the strengthening effect will be weakened. At the same time, excessive Mn should not be added to the steel. When the content of Mn in the steel is too high, it will affect the weldability of the substrate and the quality of surface galvanization. Based on this, in order to give full play to the beneficial effect of Mn element, in the high-strength and high formability cold-rolled hot-dip pure zinc galvanized strip steel described in the present disclosure, the mass percentage of Mn element is controlled between 2.2% and 3.0%, such as 2.4%, 2.6% and 2.8%.

Si: In the high-strength and high formability cold-rolled hot-dip pure zinc galvanized strip steel described in the present disclosure, Si is a ferrite solid solution strengthening element, which can strongly improve the strength of the steel plate. At the same time, Si can also promote the enrichment of C atoms from ferrite to austenite, purify ferrite, and improve austenite stability. However, it should be noted that the Si content in the steel should not be too high, and a overly high Si content will directly affect the plating-ability and spot-welding performance of the substrate. Therefore, in order to give full play to the beneficial effect of Si element, the content of Si element in steel must be strictly controlled, and in the high-strength and high formability cold-rolled hot-dip pure zinc galvanized strip steel described in the present disclosure, the mass percentage of Si element is controlled between 0.3% and 0.9%, such as 0.4%, 0.5%, 0.6%, 0.7%, 0.8%.

Al: In the high-strength and high formability cold-rolled hot-dip pure zinc galvanized strip steel described in the present disclosure, the function of Al element is similar to that of Si element, which can effectively inhibit carbide precipitation and promote the diffusion of carbon element to austenite. In addition, Al can also improve the stacking fault energy of austenite and improve the stability of austenite. At the same time, the addition of Al to the steel can also refine the grain by forming AlN, pinning grain boundaries.

However, it should be noted that the content of Al in the steel should not be too high, and when the content of Al in the molten steel is too high, it is easy to cause problems such as water nozzle blockage in the continuous casting process and a significant increase in Acs. Therefore, in order to give full play to the beneficial effect of Al element, in the high-strength and high formability cold-rolled hot-dip pure zinc galvanized strip steel described in the present disclosure, the mass percentage of Al element is controlled between 0.1% and 0.5%, such as 0.2%, 0.3% and 0.4%.

Ti: In the high-strength and high formability cold-rolled hot-dip pure zinc galvanized strip steel described in the present disclosure, Ti is combined with C and N to form Ti (C, N), TiN and TiC, which can refine the as-cast microstructure and can hinder grain coarsening during hot processing. However, it should be noted that the content of Ti element in the steel should not be too high, and the addition of excessive Ti will increase the cost, and will lead to an increase in the content and size of the above-mentioned precipitates, thereby reducing the ductility of the steel plate. Therefore, in order to exert the beneficial role of Ti element, in the high-strength and high formability cold-rolled hot-dip galvanized steel described in the present disclosure, the mass percentage of Ti element needs to be controlled between 0.01% and 0.1%, such as 0.02%, 0.04%, 0.06%, 0.08%. In some embodiments, the mass percentage of Ti element is controlled between 0.01% and 0.08%.

Nb: In the high-strength and high formability cold-rolled hot-dip pure zinc galvanized strip steel described in the present disclosure, the Nb element can strongly inhibit the dynamic recrystallization, and it forms Nb(C, N) by combining with C and N, which can effectively inhibit the grain coarsening in hot processing and refine the ferrite grains. The addition of Nb and Ti will significantly refine the austenite structure of the matrix, and the fine austenite grains will be more stable in size and have excellent thermal and mechanical stability. However, it should be noted that the content of Nb in steel should not be too high, and adding too much Nb will deteriorate the hot processing properties of the steel and the toughness of the steel plate. Based on this, in order to exert the beneficial effect of Nb element, in the present disclosure, the mass percentage of Nb element is controlled between 0.01% and 0.1%, such as 0.02%, 0.04%, 0.06% and 0.08%. In some embodiments, the mass percentage of Nb is controlled between 0.01% and 0.07%.

Cr: In the high-strength and high formability cold-rolled hot-dip pure zinc galvanized strip steel described in the present disclosure, Cr can effectively refine the grain structure and inhibit the grain coarsening during hot processing, and Cr is a ferrite forming element, which can promote the diffusion of C to the austenite, improve the stability of the austenite, and reduce the critical cooling rate during annealing. However, the Cr content in the steel should not be too high, and an overly high Cr content will destroy the ductility and surface plating-ability of the steel. For this reason, the content of Cr element in steel must be strictly controlled, and in the present disclosure, the mass percentage of Cr element is controlled between 0.01% and 0.3%, such as 0.02%, 0.05%, 0.1%, 0.15%, 0.2%, 0.25%.

Further, in the high-strength and high formability cold-rolled hot-dip pure zinc galvanized strip steel of the present disclosure, the chemical elements of the substrate further comprise at least one of the following elements: Mo: 0.02~0.2%, V: 0.005~0.2%, Cu: 0.003~0.5%, B: 0.0005~0.003%.

In order to further optimize the performance of high-strength and high formability cold-rolled hot-dip pure zinc galvanized strip steel as described in the present disclosure, in some preferred embodiments, Mo, V, Cu, B elements can be further added to the steel.

Mo: In the present disclosure, the role of the Mo element is similar to that of Cr, which can shift the pearlite and bainite C curves to the right and effectively improve the hardenability of the steel; at the same time, Mo can also significantly improve the strength through solid solution strengthening and precipitation strengthening, without affecting the quality of surface galvanization. However, the Mo element is expensive. Considering the production cost, Mo should not be added excessively. Therefore, in the high-strength and high formability cold-rolled hot-dip pure zinc galvanized strip steel described in the present disclosure, the mass percentage of Mo element is controlled between 0.02% and 0.2%, such as 0.05%, 0.1%, 0.15%.

V: In the present disclosure, V mainly exists in the form of VC in hot-dip galvanized steel, and the strength and toughness of the steel are improved by refinement of grains caused by pinning grain boundaries and diffusion precipitation strengthening in ferrite. At the same time, the refinement of grains improves the thermal and mechanical stability of austenite, which is conducive to the improvement of strength and plasticity. However, adding V element can also further increase the alloy cost of steel. Therefore, in the high-strength and high formability cold-rolled hot-dip pure zinc galvanized strip steel described in the present disclosure, the mass percentage of V element is controlled between 0.005% and 0.2%, such as 0.01%, 0.03%, 0.05%, 0.1%, 0.15%.

Cu: In the present disclosure, Cu is an austenite stabilizing element, which can hinder grain coarsening at high temperature, which is conducive to obtaining a certain amount of austenite in the structure. At the same time, during the galvanizing process, Cu element will be precipitated in $\varepsilon$-Cu, which effectively improves the strength of the steel. But the Cu element content in the steel should not be too high. When the Cu content is too high, it will have an adverse effect on the hot deformation processing. Therefore, in the high-strength and high formability cold-rolled hot-dip pure zinc galvanized strip steel described in the present disclosure, the mass percentage of Cu element is controlled between 0.003% and 0.5%, such as 0.005%, 0.01%, 0.05%, 0.1%, 0.2%, 0.4%.

B: In the present disclosure, B element can hinder the recrystallization of steel in the hot rolling process, which is conducive to the refinement of the microstructure caused by the cumulative deformation. But the content of B element in the steel should not be too high, and adding excessive B can generate BC, thereby reducing the ductility of the steel. Therefore, in the high-strength and high formability cold-rolled hot-dip pure zinc galvanized strip steel described in the present disclosure, the mass percentage of B element is controlled between 0.0005% and 0.003%, such as 0.001%, 0.0015%, 0.002%, 0.0025%.

Further, in the high-strength and high formability cold-rolled hot-dip pure zinc galvanized strip steel described in the present disclosure, the mass percentage of each chemical element in the substrate satisfies: Si+Al+Cr≤1.2%.

In the above-mentioned technical solution of the present disclosure, the present disclosure can further control the element ratio in the steel while controlling the mass percentage of a single chemical element, and make the mass percentages of Si, Al and Cr satisfy: Si + Al + Cr ≤1.2%. By controlling Si+Al+Cr ≤1.2%, it can not only ensure the good manufacturability of the steel plate, but also promote the distribution of carbon in the martensite to the austenite, which is conducive to improving the plasticity of the steel plate.

In some embodiments, the mass percentages of Si, Al, and Cr satisfy: Si+Al+Cr is 0.4%, 0.5%, 0.6%, 0.7%, 0.8%, 0.9%, 1.0%, 1.1%, 1.2%, or with a range of any two of the above values. In some embodiments, the mass percentages of Si, Al and Cr satisfy: 0.6% ≤ Si+Al+Cr≤1.2%

Further, in the high-strength and high formability cold-rolled hot-dip pure zinc galvanized strip steel described in the present disclosure, the mass percentages of P, S and N in the inevitable impurities of the substrate satisfy: P≤0.02%, S≤0.01%, N≤0.008%.

In the high-strength and high formability cold-rolled hot-dip pure zinc galvanized strip steel described in the present disclosure, P, S, N elements are impurity elements in the steel pipe, and under the condition that technical conditions permit, in order to obtain the pipe with better performance and better quality, the content of impurity elements in the high-strength and high formability cold-rolled hot-dip pure zinc galvanized strip should be reduced as much as possible.

Therefore, in the present disclosure, the content of P, S, N elements in the steel must be strictly controlled, and controlled to be P≤0.02%, S≤0.01%, N≤0.008%. Purer steel leads to better effect.

Further, in the high-strength and high formability cold-rolled hot-dip pure zinc galvanized strip steel of the present disclosure, the mass percentage of each chemical element in the substrate satisfies: 3C+Si+6P+8S≤2.0%.

Correspondingly, the present disclosure controls the mass percentage of a single chemical element, and at the same time can further control the content of C, Si element and impurity element P and S in steel to satisfy: 3C + Si + 6P + 8S≤ 2.0%.

In the present disclosure, by controlling 3C+Si+6P+8S≤2.0%, it can be ensured that the manufactured high-strength and high formability cold-rolled hot-dip pure zinc galvanized strip acquires good welding performance.

In some embodiments, the mass percentages of C, Si, P, and S satisfy: 3C+Si+6P+8S is 0.75%, 0.8%, 1.0%, 1.2%, 1.4%, 1.6%, 1.8%, 2.0% or within the range of any two of the above values. In some embodiments, the mass percentages of C, Si, P, and S satisfy the following: 0.8%≤3C+Si+6P+8S≤2.0%

Further, in the high-strength and high formability cold-rolled hot-dip pure zinc galvanized strip steel of the present disclosure, the matrix of the microstructure of the substrate further comprises ferrite, tempered martensitic lath and bainite.

Further, in the high-strength and high formability cold-rolled hot-dip pure zinc galvanized strip steel of the present disclosure, the mass percentage of C in the residual austenite is ≥ 0.8%.

In some embodiments, in the cold-rolled hot-dip galvanized steel of the present disclosure, the mass percentage of C in the residual austenite is 0.8%, 0.9%, 1.0%, 1.1%, 1.2%, 1.3%, 1.4%, 1.5% or within the range of any two values mentioned above. In some embodiments, in the cold-rolled hot-dip galvanized steel of the present disclosure, the mass percentage of C in the residual austenite is 0.8~1.5%.

Further, in the high-strength and high formability cold-rolled hot-dip pure zinc galvanized strip steel of the present disclosure, $\varepsilon$-carbides are distributed in the tempered martensitic lath.

Further, in the high-strength and high formability cold-rolled hot-dip pure zinc galvanized strip steel of the present disclosure, the carbide precipitate phase is in a coherent or semi-coherent state with the matrix.

Further, in the high-strength and high formability cold-rolled hot-dip pure zinc galvanized strip steel described in the present disclosure, the thickness of the galvanized layer on one side of the substrate is 5~200$\mu$m, for example, 15~185$\mu$m.

In the above-mentioned technical solution of the present disclosure, utilizing galvanizing process, the coating layer with a thickness of 5~200$\mu$m can be generated by hot dipping on each side of the substrate of high-strength and high formability cold-rolled hot-dip pure zinc galvanized strip steel described in the present disclosure, and the steel plate is cooled to room temperature after the hot-dipping is completed.

Further, in the high-strength and high formability cold-rolled hot-dip pure zinc galvanized strip steel described in the present disclosure, the yield strength is 780~1030MPa, the tensile strength is ≥1180MPa, and the elongation $A_{50}$ is ≥11%.

Further, in the high-strength and high formability cold-rolled hot-dip pure zinc galvanized strip steel described in the present disclosure, the yield strength is 800~1030MPa, or 830~1030MPa, or 780~950MPa.

Further, in the high-strength and high formability cold-rolled hot-dip pure zinc galvanized strip steel described in the present disclosure, the tensile strength is ≥ 1200MPa, or 1180~1250MPa.

Correspondingly, another object of the present disclosure is to provide the manufacturing method of the above-mentioned high-strength and high formability cold-rolled hot-dip pure zinc galvanized strip. The manufacturing method has optimized the design of the annealing process, and the high-strength and high formability cold-rolled hot-dip pure zinc galvanized strip steel of the present disclosure can be effectively manufactured, so as to ensure that the steel obtains excellent mechanical properties.

In order to achieve the above purpose, the present disclosure provides a manufacturing method of above-mentioned high-strength and high formability cold-rolled hot-dip pure zinc galvanized strip steel, which comprises the steps of:

(1) smelting and casting;
(2) hot rolling;
(3) pickling;
(4) cold rolling;
(5) hot-dip galvanizing and recrystallization annealing:

(a) the steel plate is heated to a soaking temperature of T1 = 780 ~ 850°C at a heating rate V1 of 1~20 °C/s, and thermally insulated for 30 ~ 240s;
(b) the soaked steel plate is cooled to an intermediate temperature T2 at a cooling rate V2 of 2~20 °C/s, wherein T2 = 640~850 °C;
(c) the steel plate is cooled to a quenching temperature T3 at a cooling rate V3 of 20~80 °C/s and thermally insulated for 10~200s, where T3=Mf+20~Ms-30, and Ms and Mf are the starting and ending temperatures of the transformation of austenite to martensite in the structure at the cooling rate V3 at the intermediate temperature T2, respectively, wherein V3 > V2;
(d) the steel plate is heated to T4 at a ramp rate V4 of 10~50 °C/s, T4=420~500 °C, and thermally insulated for 5~200s;
(e) the steel plate enters the zinc pot for galvanizing;

(6) Cooling after galvanizing.

In the present disclosure, the manufacture of the high-strength and high formability cold-rolled hot-dip pure zinc galvanized strip steel described in the present disclosure needs to go through the process of smelting and continuous casting, hot-rolling, pickling, cold-rolling, hot-dip galvanizing and recrystallization annealing process and cooling after galvanizing.

In the above-mentioned manufacturing method of the present disclosure, the inventor optimizes the hot-dip galvanizing and recrystallization annealing process of step (5), and the process parameters of the hot-dip galvanizing and recrystallization annealing process are closely related to the design of steel grade composition, which determines the relative content of soft-phase ferrite and hard-phase martensite inside the galvanized plate, especially the size and morphology of residual austenite.

In the present disclosure, the inventor adopts the quenching-partitioning and annealing process to treat the cold-rolled steel plate, and the process steps of hot-dip galvanizing and recrystallization annealing are shown in the above steps (a)-(e).

In step (a), the cold-rolled plate needs to be heated at a heating rate V1 to the soaking temperature T1 and then thermally insulated for a period of t1, wherein V1 is selected to be 1 ~20°C/s; T1=780~850°C; t11=30~240s. In some embodiments, V1=3~18°C/s.

In this process step, if the soaking temperature T1 is lower than 780 °C and the thermal insulation time t1 for soaking is shorter than 30s, the matrix structure of the substrate corresponding to the design component in the present disclosure is not able to obtain a sufficient amount of austenite or matrix carbide of the steel plate has not been completely dissolved to form austenite particles. Correspondingly, when the soaking temperature T1 is higher than 850°C and the thermal insulation time t1 for soaking is longer than 240s, the austenite content in the steel plate after soaking treatment will increase significantly, the austenite C content will be significantly reduced, and the austenite and ferrite grains formed will be coarsen. The above factors will reduce the stability of austenite in the steel, resulting in an overly high Ms point, which in turn will cause the stability of the internal residual austenite of galvanized steel plate to decrease, and the subsequent quenching temperature will be too high.

In steps (b), (c) and (d), the soaking treated steel plate is first slowly cooled to the intermediate temperature T2 at the cooling rate V2, then immediately cooled to the quenching temperature T3 at the cooling rate V3, then thermally insulated for a time period t3, and then heated to T4 at the ramp rate V4 and thermally insulated for a time period t4, wherein, T3=Mf+20~Ms-30, and Ms and Mf are the starting and ending temperatures of the transformation of austenite in the structure to martensite at the cooling rate V3 at intermediate temperature T2, respectively, and V3 > V2.

In this technical solution, the selection of slow cooling rate V2 and intermediate temperature T2 mainly considers: avoiding the decomposition of the austenite formed by soaking treatment in the slow cooling section of step (b), so as to facilitate operation, so that the annealing heat treatment can smoothly transition from the soaking section of step (a) to the fast cooling section of step (c), and maintain the plate shape of the cold-rolled steel plate. Therefore, for the chemical composition selected by the present disclosure, V2 is selected to be 2~20 °C/s; T2 is selected to be 640~850 °C (such as 640~820 °C). Of course, if the intermediate temperature T2 is selected to be equal to T1, it means that there is no need to carry out the subsequent slow cooling treatment of step (b) after the soaking treatment of step (a).

Correspondingly, for the chemical composition selected by the present disclosure, the inventor further selects the cooling rate V3=20~80 °C/s of the fast-cooling section of step (c), and V3>V2, wherein, the selection of fast cooling rate V3 needs to reduce the austenite decomposition in the steel plate matrix as much as possible during the cooling process to ensure the formation of sufficient martensite and bainite at the quenching temperature T3. When the designed T3 temperature is too high, the martensite content is insufficient, and it is difficult to guarantee the strength of the steel; if the temperature of T3 is too low, too much martensite will be formed, and the residual austenite content will be insufficient, which will have an adverse effect on the elongation. In addition, it is possible to promote the formation of bainite in the thermal insulation stage at T3 temperature, which is conducive to the further enrichment of carbon and improving the mechanical properties.

In the present disclosure, after completing the process of the fast-cooling section of step (c), it is necessary to further heat to T4 at a ramp rate V4 in step (d) and thermally insulated for a time period t4. The T4 temperature can enrich C in martensite to adjacent austenite, improve austenite stability, and further strengthen the matrix accompanied with the precipitation of the dispersion strengthening phase. However, too long residence time will cause martensite tempering, austenite decomposition and precipitate phase coarsening, which will deteriorate the strength and plasticity of the galvanized sheet.

In summary, from the perspective of effectiveness and economy, in order to obtain an appropriate amount of residual austenite with good stability, in the above steps, it is controlled that T3=Mf+20~Ms-30, the thermal insulation time at t3=10~200s (such as 30~180s), T4=420~500 °C, and the thermal insulation time t4=5~200s (such as 15~180s).

Of course, in some preferred embodiments, in order to obtain better implementation effects, it is further preferred that T3 is 220 ~ 350 °C and the thermal insulation time t3 is 10 ~ 120s.

Further, in the manufacturing method of the present disclosure, in the step (2), the slab is heated at 1200~1280 °C, the thermal insulation time is 0.5~5h, the final rolling temperature is controlled to be ≥ 850 °C (such as 850~940 °C or 880~940 °C), and the coiling temperature is controlled to be ≤ 650 °C (such as 520~650 °C or 520~630 °C).

Further, in the manufacturing method of the present disclosure, in the step (4), the cold rolling reduction is controlled to be 30~60%, and preferably between 35% and 50%.

Further, in the manufacturing method of the present disclosure, in the step (5), the temperature of the zinc pot is 450~500 °C.

Further, in the manufacturing method of the present disclosure, in the step (6), the galvanized steel plate is cooled to room temperature at a cooling rate of ≥ 20 °C/s (such as 20~40 °C/s or 30~40 °C/s).

Compared with the prior art, the high-strength and high formability cold-rolled hot-dip pure zinc galvanized strip steel and manufacturing method thereof of the present disclosure have the advantages and beneficial effects as follows:

(1) the high-strength and high formability cold-rolled hot-dip pure zinc galvanized strip steel described in the present disclosure adopts a reasonable chemical composition, and when its chemical composition is designed, the content of C element is appropriately increased, and the content of alloying elements such as Cr, Mo is reduced, which can not only greatly reduces the alloy cost, but also effectively improves the manufacturability of steel. This high-strength and high formability cold-rolled hot-dip pure zinc galvanized strip can be produced in the existing high-strength steel continuous annealing production line, without the need of making a large adjustment, and has a good promotion and application prospect.

(2) the high-strength and high formability cold-rolled hot-dip pure zinc galvanized strip steel described in the present disclosure adopts a reasonable chemical composition, and through the design of the ratio of alloying elements, the galvanized steel plate aquires good welding performance. The present disclosure ensures that the galvanized steel plate has good spot-welding performance through low alloy content, especially the application restrictions on C, Si, P, S.

(3) The present disclosure has optimized the design of the manufacture process, optimized the design of a new hot-dip galvanizing and recrystallization annealing process, and specifically controlled the parameters of each stage. By using the annealing process, the hard phase martensite formed in the fast cooling stage of step (c) can be softened in the subsequent galvanizing process, and at the same time, it will promote the transformation of part of the austenite into bainite, reduce the strength difference between ferrite and martensite, and be beneficial to improving the plasticity.

At the same time, the galvanizing process also enriches the austenite with carbon, which eventually exists in the structure at room temperature. In addition, the technical solution also uses the effect of microalloying elements to refine the grains to further improve the stability of austenite, so that the steel plate can obtain sufficient stable austenite under the condition of lower alloying elements.

To sum up, it can be seen that in the present disclosure, the inventor further introduces residual austenite into the ferrite and martensite structure of the traditional dual phase steel through reasonable composition matching and process design, so as to greatly improve the uniform elongation of the high-strength and high formability cold-rolled hot-dip pure zinc galvanized strip steel under the condition of similar strength, thereby broadening the formability of the galvanized steel.

The high-strength and high formability cold-rolled hot-dip pure zinc galvanized strip has a yield strength of 780~1030MPa, a tensile strength of $\geq$1180MPa, and an elongation $A_{50}$ of $\geq$11% and has excellent welding performance and formability. It can be effectively used in the manufacture of parts, such as automobile structural parts, anti-collision parts, etc. and has good promotion prospect and application value.

In the process of practical application, when the steel plate is deformed, the present disclosure can effectively improve the work hardening ability of the steel plate by using the TRIP effect of residual austenite, improve the strength and plasticity of the galvanized steel plate, thereby improving the formability of hot-dip galvanized dual phase steel.

**Description of the drawings**

Fig. 1 schematically shows the manufacturing method of high-strength and high formability cold-rolled hot-dip pure zinc galvanized strip steel described in the present disclosure, which is a schematic diagram of the control process when the hot-dip galvanizing and recrystallization annealing process is carried out in one embodiment.

Fig. 2 is a metallographic structure photograph of high-strength and high formability cold-rolled hot-dip pure zinc galvanized strip steel of Example 1.

**Detailed Description**

The high-strength and high formability cold-rolled hot-dip pure zinc galvanized strip steel and manufacturing method thereof will be further explained and interpreted below in conjunction with the drawings of the description and specific examples of the present disclosure, but the explanation and interpretation do not constitute an undue limitation to the technical solution of the present disclosure.

Example 1-9

The high-strength and high formability cold-rolled hot-dip pure zinc galvanized strip steels of Example 1-9 of the present disclosure were manufactured by adopting the following steps:

(1) Smelting and casting were carried out according to the mass percentage of chemical elements shown in Table 1.
(2) Hot rolling: the obtained slab was hot-rolled, and the slab was heated at 1200~1280 °C, and the insulation time was controlled to be 0.5~5h, the final rolling temperature was controlled to be $\geq$ 850 °C, and the hot-rolled plate was coiled at a coiling temperature of ≤650 °C.

(3) Pickling: the hot-rolled plate was pickled after hot rolling.

(4) Cold rolling: cold rolling deformation was carried out on the pickled hot-rolled plate, and the cold rolling reduction was controlled to be 30~60%, and preferably between 35% and 50%.

(5) Hot-dip galvanizing and recrystallization annealing:

(a) The steel plate was heated at a heating rate V1 of 1~20 °C/s to a soaking temperature T1 = 780 ~ 850 °C, and thermally insulated for 30 ~ 240s;

(b) The soaking steel plate was cooled to an intermediate temperature T2 at a cooling rate V2 of 2~20 °C/s, wherein T2 = 640~850 °C;

(c) The steel plate was cooled to a quenching temperature T3 at a cooling rate V3 of 20~80 °C/s and thermally insulated for 10~200s, where T3 = Mf + 20 ~ Ms-30, Ms and Mf were the starting and ending temperatures of the transformation of austenite to martensite in the structure at the cooling rate at the intermediate temperature T2, respectively, wherein V3 >V2;

(d) The steel plate was heated to T4 at a ramp rate V4 of 10~50 °C/s, T4=420~500 °C, and thermally insulated for 5~200s;

(e) The steel plate entered the zinc pot for galvanizing.

(6) Cooling after galvanizing, after the galvanizing is completed, the steel plate was slowly cooled to room temperature at a cooling rate of not less than 20 °C/s.

In the present disclosure, the chemical element composition and related process design of the high-strength and high formability cold-rolled hot-dip pure zinc galvanized strip steels of Example 1-9 of the present disclosure all met the requirements of the design specification of the present disclosure.

Table 1 lists the mass percentage of each chemical element in the high-strength and high formability cold-rolled hot-dip pure zinc galvanized strip steels of Example 1-9.

Table 1. (wt%, with a balance of Fe and other inevitable impurities except P, S, N)

| No. | Chemical element | | | | | | | | | | | | | | Si+Al+ Cr | 3C+Si+ 6P+8S |
|-----|------|-----|------|-----|------|------|------|------|------|-----|--------|-------|-------|--------|-----------|--------------|
| | C | Mn | Si | Al | Nb | Ti | Cr | V | Mo | Cu | B | P | S | N | | |
| Ex. 1 | 0.19 | 2.7 | 0.8 | 0.1 | 0.04 | 0.02 | 0.1 | - | - | - | - | 0.01 | 0.002 | 0.0005 | 1 | 1.446 |
| Ex. 2 | 0.21 | 2.6 | 0.5 | 0.3 | 0.04 | 0.03 | 0.05 | - | - | - | - | 0.005 | 0.003 | 0.0004 | 0.85 | 1.184 |
| Ex. 3 | 0.16 | 3.0 | 0.35 | 0.5 | 0.07 | 0.01 | 0.3 | - | - | - | - | 0.0013 | 0.002 | 0.0008 | 1.15 | 0.8538 |
| Ex. 4 | 0.24 | 2.3 | 0.9 | 0.2 | 0.01 | 0.08 | 0.1 | 0.1 | - | - | - | 0.01 | 0.003 | 0.0006 | 1.2 | 1.704 |
| Ex. 5 | 0.2 | 2.6 | 0.8 | 0.2 | 0.04 | 0.02 | 0.08 | - | 0.1 | - | 0.0006 | 0.007 | 0.004 | 0.0004 | 1.08 | 1.474 |
| Ex. 6 | 0.22 | 2.6 | 0.6 | 0.1 | 0.04 | 0.02 | 0.01 | - | - | 0.4 | 0.0006 | 0.005 | 0.002 | 0.0003 | 0.71 | 1.306 |
| Ex. 7 | 0.2 | 2.5 | 0.5 | 0.1 | 0.01 | 0.04 | 0.03 | 0.03 | 0.15 | - | 0.0022 | 0.015 | 0.003 | 0.0005 | 0.63 | 1.214 |
| Ex. 8 | 0.2 | 2.5 | 0.5 | 0.1 | 0.02 | 0.04 | 0.01 | - | 0.05 | 0.1 | 0.0017 | 0.008 | 0.003 | 0.0003 | 0.61 | 1.172 |
| Ex. 9 | 0.19 | 2.7 | 0.75 | 0.2 | 0.04 | 0.02 | 0.12 | - | - | - | 0.0015 | 0.01 | 0.002 | 0.001 | 1.07 | 1.396 |

Tables 2-1 and 2-2 list the specific process parameters adopted in the above manufacturing process steps of high-strength and high formability cold-rolled hot-dip pure zinc galvanized strip steels in Example 1-9.

Table 2-1.

| No. | step (2) | | | | step (4) | step (5) | | |
|---|---|---|---|---|---|---|---|---|
| | slab heating temperature (°C) | thermal insulation time (h) | final rolling temperature (°C) | coiling temperature (°C) | cold rolling reduction (%) | heating rate V1 (°C/s) | soaking temperature T1 (°C) | thermal insulation time t1 for soaking (s) |
| Ex. 1 | 1260 | 3 | 890 | 550 | 55 | 5 | 820 | 90 |
| Ex. 2 | 1250 | 4 | 920 | 580 | 60 | 3 | 780 | 150 |
| Ex. 3 | 1280 | 1.5 | 940 | 630 | 50 | 8 | 830 | 50 |
| Ex. 4 | 1240 | 3 | 880 | 520 | 40 | 3 | 790 | 210 |
| Ex. 5 | 1250 | 3 | 900 | 580 | 45 | 10 | 830 | 75 |
| Ex. 6 | 1230 | 4 | 920 | 550 | 47 | 5 | 800 | 90 |
| Ex. 7 | 1230 | 4.5 | 900 | 600 | 43 | 18 | 815 | 80 |
| Ex. 8 | 1250 | 4 | 930 | 560 | 50 | 10 | 840 | 35 |
| Ex. 9 | 1260 | 5 | 880 | 530 | 53 | 6 | 820 | 70 |

Table 2-2.

| No. | step (5) | | | | | | | | | | | step (6) | thickness of the galvanized layer on one side of the substrate ($\mu$m) |
|---|---|---|---|---|---|---|---|---|---|---|---|---|---|
| | cooling rate V2 (°C/s) | intermediate temperature T2 (°C) | cooling rate V3 (°C/s) | Quenching temperature T3 (°C) | Insulation time of quenching t3 (s) | Ms (°C) | Mf (°C) | Ramp rate V4 (°C/s) | Reheating temperature T4 (°C) | Insulation time of reheating (s) | Zinc pot temperature (°C) | cooling rate at which the galvanized steel plate is cooled to room temperature (°C/s) | |
| Ex. 1 | 8 | 680 | 30 | 240 | 150 | 425 | 200 | 50 | 440 | 40 | 453 | 30 | 60 |
| Ex. 2 | 3 | 710 | 35 | 270 | 80 | 410 | 180 | 45 | 450 | 25 | 452 | 30 | 55 |
| Ex. 3 | 18 | 640 | 32 | 230 | 180 | 415 | 175 | 35 | 460 | 20 | 460 | 35 | 185 |
| Ex. 4 | 4 | 670 | 28 | 300 | 30 | 400 | 190 | 15 | 430 | 180 | 453 | 35 | 15 |
| Ex. 5 | 7 | 675 | 45 | 240 | 120 | 420 | 185 | 50 | 440 | 35 | 454 | 35 | 30 |
| Ex. 6 | 5 | 700 | 45 | 260 | 75 | 415 | 190 | 35 | 480 | 15 | 490 | 35 | 53 |
| Ex. 7 | 15 | 670 | 40 | 240 | 100 | 420 | 195 | 30 | 460 | 30 | 453 | 40 | 80 |
| Ex. 8 | 10 | 820 | 70 | 260 | 60 | 430 | 205 | 47 | 480 | 20 | 475 | 40 | 120 |
| Ex. 9 | 6 | 700 | 42 | 240 | 75 | 410 | 190 | 25 | 440 | 90 | 455 | 40 | 60 |

It should be noted that in the above-mentioned manufacturing process, before the manufactured substrate was galvanized, in order to analyze the microstructure of the substrate, the inventor sampled the manufactured substrate of each example, respectively, and observed and analyzed the microstructure of the substrate samples manufactured in Example 1-9. In this context, the microstructure was observed with a ZEISS Axio Imager M2m light microscope. In addition, the details of nanoprecipitates and microstructure were further observed and analyzed by the spherical aberration correction field emission transmission electron microscopy (TEM; Model JEOL ARM-200F) with TEM operating acceleration voltage of 200kV. The mass percentage of C in residual austenite was detected by the following formula:

$$a_\gamma = 3.578 + 0.033wC + 0.0056wAl + 0.00095wMn + 0.00157wSi + 0.0015wCu$$

wherein, $a_\gamma$ is the lattice constant of residual austenite (tested by the RINT2200/PC type rotating target X-ray diffractometer, which adopts rotating $MoK\alpha$ radiation, tube pressure 40 kV, tube flow 40 mA, step size 0.02°, scanning $2\theta$ range 30~120°. The measured diffraction lines were fitted to the full spectrum by DIFFRAC plus tops 4.0 analysis software and the diffraction data processing software is jade6.5), $w_C$, $w_{Mn}$, $w_{Al}$, $w_{Si}$ and $w_{Cu}$ are the mass fractions of carbon, manganese, aluminum, silicon and copper in the residual austenite, respectively. The results of these observations and analyses were presented in Table 3 below.

Table 3 lists the results of microstructure observation and analysis of the substrate of high-strength and high formability cold-rolled hot-dip pure zinc galvanized strip steels for Example 1-9.

Table 3.

| No. | Microstructure | volume phase fraction of residual austenite (%) | Carbide precipitate phase size (nm) | mass percentage of C in the residual austenite |
|---|---|---|---|---|
| Ex. 1 | Ferrite, tempered martensitic lath, bainite and residual austenite | 8 | 30 | 1.1 |
| Ex. 2 | Ferrite, tempered martensitic lath, bainite and residual austenite | 7 | 35 | 0.9 |
| Ex. 3 | Ferrite, tempered martensitic lath, bainite and residual austenite | 10 | 50 | 1.2 |
| Ex. 4 | Ferrite, tempered martensitic lath, bainite and residual austenite | 9 | 35 | 1.1 |
| Ex. 5 | Ferrite, tempered martensitic lath, bainite and residual austenite | 6 | 40 | 1.4 |
| Ex. 6 | Ferrite, tempered martensitic lath, bainite and residual austenite | 8 | 70 | 1.2 |
| Ex. 7 | Ferrite, tempered martensitic lath, bainite and residual austenite | 7 | 55 | 1.5 |
| Ex. 8 | Ferrite, tempered martensitic lath, bainite and residual austenite | 8 | 75 | 1.2 |
| Ex. 9 | Ferrite, tempered martensitic lath, bainite and residual austenite | 9 | 30 | 1.3 |

As shown in Table 3 above, in the present disclosure, the matrix of the microstructure of the manufactured substrates of Example 1-9 comprised: ferrite, tempered martensitic lath, bainite and residual austenite, and its microstructure further comprised a carbide precipitate phase with a size of less than 80nm, and the specific size of the carbide precipitate phase was between 30nm and 75nm. In addition, the volume phase fractions of residual austenite in the substrate microstructures of Example 1-9 were between 5% and 10%.

It was observed that in the substrates of Example 1-9 manufactured in the present disclosure, $\varepsilon$-carbides were distributed in the tempered martensitic lath in the microstructure, the C content in the residual austenite was not less than 0.8%, and the carbide precipitate phase was in a coherent or semi-coherent state with the matrix.

Correspondingly, after completing the above-mentioned observation and analysis of the microstructure, in order to further illustrate that the high-strength and high formability cold-rolled hot-dip pure zinc galvanized strip steels of Example 1-9 manufactured by the present disclosure had excellent properties, the inventor further sampled the high-strength and high formability cold-rolled hot-dip pure zinc galvanized strip steels of the manufactured finished Example 1-9, respectively, and carried out various performance tests on the high-strength and high formability cold-rolled hot-dip pure zinc galvanized strip steel samples of Example 1-9, and the relevant test results were listed in Table 4.

The relevant performance testing methods were as follows:

Tensile test: in accordance with GB228.1-2021, a plate tension specimen with a gauge distance of 50mm was used to test and obtain the yield strength, tensile strength and elongation values of high-strength and high formability cold-rolled hot-dip pure zinc galvanized strip steels in Example 1-9 at room temperature.

Table 3 lists the performance test results of high-strength and high formability cold-rolled hot-dip pure zinc galvanized strip steels in Example 1-9.

Table 3.

| No. | yield strength (MPa) | tensile strength (MPa) | elongation $A_{50}$ (%) |
|---|---|---|---|
| Ex. 1 | 840 | 1220 | 15 |
| Ex. 2 | 790 | 1190 | 14 |
| Ex. 3 | 870 | 1200 | 16 |
| Ex. 4 | 900 | 1230 | 14 |
| Ex. 5 | 950 | 1250 | 13 |
| Ex. 6 | 800 | 1185 | 17 |
| Ex. 7 | 900 | 1205 | 13 |
| Ex. 8 | 870 | 1230 | 14 |
| Ex. 9 | 830 | 1215 | 15 |

Referring to Table 3, it can be seen that the high-strength and high formability cold-rolled hot-dip pure zinc galvanized strip steels in Example 1-9 obtained by the present disclosure all have excellent mechanical properties, and the yield strength is between 790MPa and 900MPa, the tensile strength is between 1185MPa and 1250MPa, and the elongation $A_{50}$ is between 13% and 17%.

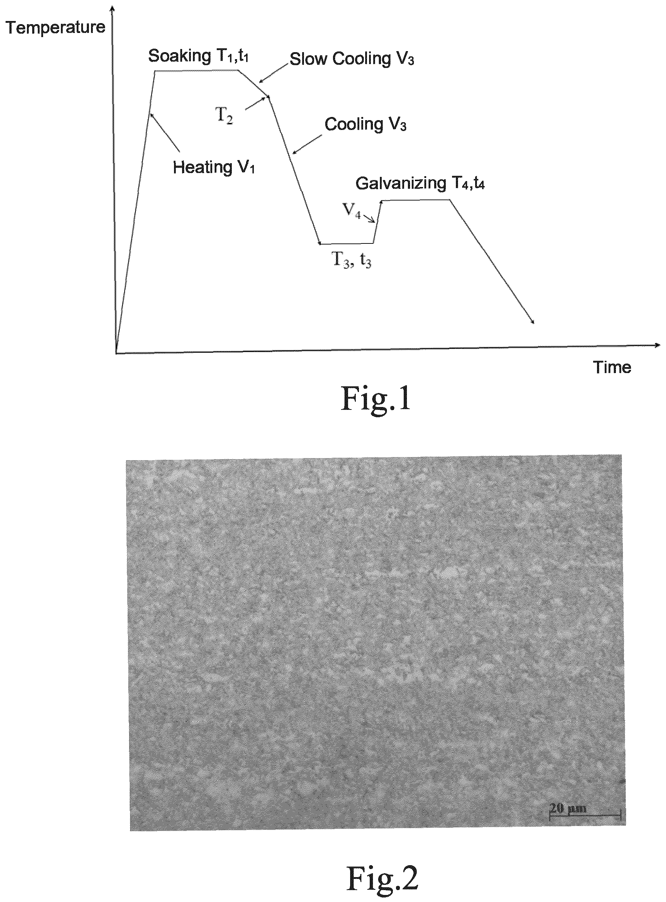

Fig. 1 schematically shows the manufacturing method of high-strength and high formability cold-rolled hot-dip pure zinc galvanized strip steel described in the present disclosure, which is a schematic diagram of the control process when the hot-dip galvanizing and recrystallization annealing process is carried out in one embodiment.

As shown in Figure 1, in the present disclosure, when carrying out the hot-dip galvanizing and recrystallization annealing process, the cold-rolled plate is first heated to the soaking temperature T1 at the heating rate V1 and then thermally insulated for a time period of t1, and then the soaking-treated steel plate is first cooled slowly to the intermediate temperature T2 at the cooling rate V2 and then immediately cooled to the galvanizing temperature T3 at the fast cooling rate V3 and then thermally insulated for a time period t3. After completing the above steps, the steel plate is heated to T4 at the ramp rate V4, and after the thermal insulation time of t4, the steel plate is fed to the zinc pot for galvanizing and galvanized.

Correspondingly, after the completion of the hot-dip galvanizing and recrystallization annealing process described above, the galvanized steel plate can be further cooled to room temperature.

Fig. 2 is a metallographic structure photograph of high-strength and high formability cold-rolled hot-dip pure zinc galvanized strip steel of Example 1.

As shown in Figure 2, in this example, the microstructure of the high-strength and high formability cold-rolled hot-dip pure zinc galvanized strip steel of Example 1 is ferrite, tempered martensitic lath, bainite and residual austenite, wherein the volume phase fraction of the residual austenite is 8%.

It should be noted that the combination of the various technical features in the present disclosure is not limited to the combination mode recorded in the claims of the present disclosure or the combination mode recorded in the specific embodiment, and all the technical features recorded in the present disclosure can be freely combined or combined in any way, unless there is a contradiction between them.

It should also be noted that the examples listed above are only specific examples of the present disclosure. Obviously, the present disclosure is not limited to the above examples, and similar changes or deformations made thereby are directly derived or easily envisaged by those skilled in the art from the contents disclosed in the present disclosure, and should fall within the scope of protection of the present disclosure.

**Claims**

1. A high-strength and high formability cold-rolled hot-dip pure zinc galvanized strip steel, which comprises a substrate and a galvanized layer coated on the substrate, wherein the substrate comprises Fe and inevitable impurity elements, **characterized in that** the substrate further comprises the following chemical elements in percentage by mass:

   C: 0.15~0.25%, Mn: 2.2~3.0%, Si: 0.3~0.9%, Al: 0.1~0.5%, Nb: 0.01~0.1%, Ti: 0.01~0.1%, Cr: 0.01~0.3%;
   wherein the matrix of the microstructure of the substrate comprises a residual austenite with a volume fraction of 5~15%, and the microstructure further comprises a carbide precipitate phase with a size of less than 80nm.

2. The high-strength and high formability cold-rolled hot-dip pure zinc galvanized strip steel of claim 1, wherein the mass percentage of each chemical element of the substrate is:
   C: 0.15~0.25%, Mn: 2.2~3.0%, Si: 0.3~0.9%, Al: 0.1~0.5%, Nb: 0.01~0.1%, Ti: 0.01~0.1%, Cr: 0.01~0.3%; with a balance of Fe and inevitable impurities.

3. The high-strength and high formability cold-rolled hot-dip pure zinc galvanized strip steel of claim 1 or 2, wherein the chemical elements of the substrate further comprise at least one of the following elements: Mo: 0.02~0.2%, V: 0.005~0.2%, Cu: 0.003~0.5%, B: 0.0005~0.003%.

4. The high-strength and high formability cold-rolled hot-dip pure zinc galvanized strip steel of claim 1 or 2, wherein the mass percentage of each chemical element in the substrate satisfies:
   $Si+Al+Cr \leq 1.2\%$.

5. The high-strength and high formability cold-rolled hot-dip pure zinc galvanized strip steel of claim 1 or 2, wherein the mass percentages of P, S and N in the inevitable impurities of the substrate satisfies: $P \leq 0.02\%$, $S \leq 0.01\%$, $N \leq 0.008\%$.

6. The high-strength and high formability cold-rolled hot-dip pure zinc galvanized strip steel of claim 1 or 2, wherein the mass percentage of each chemical element in the substrate satisfies:
   $3C+Si+6P+8S \leq 2.0\%$.

7. The high-strength and high formability cold-rolled hot-dip pure zinc galvanized strip steel of claim 1 or 2, wherein the matrix of the microstructure of the substrate comprises ferrite, tempered martensitic lath and bainite.

8. The high-strength and high formability cold-rolled hot-dip pure zinc galvanized strip steel of claim 1 or 2, wherein the mass percentage of C in the residual austenite is $\geq 0.8\%$.

9. The high-strength and high formability cold-rolled hot-dip pure zinc galvanized strip steel of claim 7, wherein $\varepsilon$-carbides are distributed in the tempered martensitic lath.

10. The high-strength and high formability cold-rolled hot-dip pure zinc galvanized strip steel of claim 1 or 2, wherein the carbide precipitate phase is in a coherent or semi-coherent state with the matrix.

11. The high-strength and high formability cold-rolled hot-dip pure zinc galvanized strip steel of claim 1 or 2, wherein the thickness of the galvanized layer on one side of the substrate is 5~200μm.

12. The high-strength and high formability cold-rolled hot-dip pure zinc galvanized strip steel of claim 1 or 2, wherein it has a yield strength of 780~1030MPa, a tensile strength of $\geq$1180MPa, and an elongation $A_{50}$ of $\geq$11%.

13. A manufacturing method of the high-strength and high formability cold-rolled hot-dip pure zinc galvanized strip steel of any one of claims 1-12, comprising the steps of:

(1) smelting and casting;
(2) hot rolling;
(3) pickling;
(4) cold rolling;
(5) hot-dip galvanizing and recrystallization annealing:

(a) the steel plate is heated to a soaking temperature of T1 = 780 ~ 850 °C at a heating rate V1 of 1~20 °C/s, and thermally insulated for 30 ~ 240s;
(b) the soaked steel plate is cooled to an intermediate temperature T2 at a cooling rate V2 of 2~20 °C/s, wherein T2 = 640~850 °C;
(c) the steel plate is cooled to a quenching temperature T3 at a cooling rate V3 of 20~80 °C/s and thermally insulated for 10~200s, where T3=Mf+20~Ms-30, and Ms and Mf are the starting and ending temperatures of the transformation of austenite to martensite in the structure at the cooling rate V3 at the intermediate temperature T2, respectively, wherein V3 > V2;
(d) the steel plate is heated to T4 at a ramp rate V4 of 10~50 °C/s, T4=420~500 °C, and thermally insulated for 5~200s;
(e) the steel plate enters the zinc pot for galvanizing;

(6) Cooling after galvanizing.

14. The manufacturing method of claim 13, wherein in the step (2), the slab is heated at 1200~1280 °C, the thermal insulation time is 0.5~5h, the final rolling temperature is controlled to be ≥ 850 °C, and the coiling temperature is ≤ 650 °C and/or, in the step (4), the cold rolling reduction is controlled to be 30~60%.

15. The manufacturing method of claim 13, wherein in the step (5), the temperature of the zinc pot is 450~500 °C; and/or, in the step (6), the galvanized steel plate is cooled to room temperature at a cooling rate of ≥ 20 °C/s.

Fig.1

Fig.2

## INTERNATIONAL SEARCH REPORT

| International application No. |
| --- |
| **PCT/CN2023/102174** |

| A. CLASSIFICATION OF SUBJECT MATTER |
| --- |
| C21D8/02(2006.01)i; C22C38/14(2006.01)i; C22C38/26(2006.01)i; C22C38/04(2006.01)i; C22C38/12(2006.01)i; C22C38/28(2006.01)i; C22C38/18(2006.01)i; C22C38/02(2006.01)i; C22C38/38(2006.01)i; C22C38/06(2006.01)i; C23C2/06(2006.01)i; C23C2/40(2006.01)i |
| According to International Patent Classification (IPC) or to both national classification and IPC |

| B. FIELDS SEARCHED |
| --- |
| Minimum documentation searched (classification system followed by classification symbols)<br>    IPC: C22C,C23C,C21D |
| Documentation searched other than minimum documentation to the extent that such documents are included in the fields searched |
| Electronic data base consulted during the international search (name of data base and, where practicable, search terms used)<br>    CNTXT, DWPI, ENTXT, WPABS, CNKI, ISI WEB OF SCIENCE: 锌带钢, 锌钢, 碳, C, 锰, Mn, 硅, Si, 铝, Al, 铌, Nb, 钛, Ti, 铬, Cr, 钼, Mo, 钒, V, 铜, Cu, 硼, B, 残余奥氏体, 析出, 再结晶, 退火, 镀锌, zinc strip steel, zinc steel, carbon, manganese, silicon, aluminum, niobium, titanium, chromium, molybdenum, vanadium, copper, boron, residual austenite, retained austenite, precipitat+, recrystallization, anneal+, galvaniz+ |

| C. DOCUMENTS CONSIDERED TO BE RELEVANT | | |
| --- | --- | --- |
| Category* | Citation of document, with indication, where appropriate, of the relevant passages | Relevant to claim No. |
| X | CN 111748746 A (BAOSHAN IRON & STEEL CO., LTD.) 09 October 2020 (2020-10-09) description, paragraphs [0005]-[0057] | 1-12 |
| Y | CN 111748746 A (BAOSHAN IRON & STEEL CO., LTD.) 09 October 2020 (2020-10-09) description, paragraphs [0005]-[0057] | 13-15 |
| Y | CN 111748745 A (BAOSHAN IRON & STEEL CO., LTD.) 09 October 2020 (2020-10-09) description, paragraphs [0004]-[0049] | 13-15 |
| A | CN 112301293 A (BAOSHAN IRON & STEEL CO., LTD.) 02 February 2021 (2021-02-02) entire description | 1-15 |
| A | CN 113416889 A (ANGANG STEEL COMPANY LIMITED) 21 September 2021 (2021-09-21) entire description | 1-15 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 September 2023** | **23 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/102174**

**C.     DOCUMENTS CONSIDERED TO BE RELEVANT**

| Category* | Citation of document, with indication, where appropriate, of the relevant passages | Relevant to claim No. |
|---|---|---|
| A | CN 113416887 A (ANGANG STEEL COMPANY LIMITED) 21 September 2021 (2021-09-21)<br>    entire description | 1-15 |
| A | CN 114438400 A (BAOSHAN IRON & STEEL CO., LTD.) 06 May 2022 (2022-05-06)<br>    entire description | 1-15 |
| A | JP 2012107319 A (JFE STEEL CORP.) 07 June 2012 (2012-06-07)<br>    entire description | 1-15 |

**INTERNATIONAL SEARCH REPORT**
Information on patent family members

International application No.

**PCT/CN2023/102174**

| Patent document cited in search report | | | Publication date (day/month/year) | Patent family member(s) | | | Publication date (day/month/year) |
|---|---|---|---|---|---|---|---|
| CN | 111748746 | A | 09 October 2020 | CN | 111748746 | B | 28 June 2022 |
| CN | 111748745 | A | 09 October 2020 | CN | 111748745 | B | 18 March 2022 |
| CN | 112301293 | A | 02 February 2021 | CN | 112301293 | B | 28 June 2022 |
| CN | 113416889 | A | 21 September 2021 | CN | 113416889 | B | 22 July 2022 |
| CN | 113416887 | A | 21 September 2021 | CN | 113416887 | B | 19 July 2022 |
| CN | 114438400 | A | 06 May 2022 | CN | 114438400 | B | 16 December 2022 |
| JP | 2012107319 | A | 07 June 2012 | JP | 5895437 | B2 | 30 March 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105506513 A
- CN 106244923 A

- CN 102021482 A